# EUROPÄISCHE PATENTSCHRIFT

(11) **EP 0 455 591 B1**
(45) Veröffentlichungstag und Bekanntmachung des Hinweises auf die Patenterteilung: **01.09.1993**
(21) Anmeldenummer: 91810306.0
(22) Anmeldetag: 24.04.1991
(51) Int. Cl.: B27B 5/06, B23D 59/00, B23Q 1/26, B23Q 16/04

(54) **Plattensäge mit Parallelführung des Sägeaggregates**
Plate saw having a parallel guiding system for the saw unit
Scie de panneaux ayant un système de guidage parallèle pour l'unité de sciage

(30) Priorität: 02.05.1990 CH 1490/90
(43) Veröffentlichungstag der Anmeldung: 06.11.1991
(73) Patentinhaber: Striebig AG, CH-6014 Littau (CH)
(72) Erfinder: Striebig, Ludwig, CH-6005 Luzern (CH)
(74) Vertreter: Eschmann, Heinz

(56) Entgegenhaltungen:
- WO-A-89/05709
- CH-A- 386 095
- FR-A- 2 385 503
- US-A- 2 289 259
- US-A- 2 329 905
- US-A- 2 590 119
- US-A- 3 151 642
- US-A- 3 465 615

## Beschreibung

Die Erfindung betrifft eine Plattensäge, wie sie im Oberbegriff des unabhängigen Patentanspruches definiert ist.

Es sind Vorrichtungen bekannt, welche das Sägeaggregat beim Eintauchen, d.h. beim Ausführen eines Horizontal- oder Vertikalschnittes so führen, dass ein Abweichen des Sägeblattes von der gewünschten Schnittebene nicht möglich ist. Diese bekannten Vorrichtungen beruhen auf dem Zusammenwirken zweier jeweils am Sägebalken bzw. am Sägeaggregat angeordneten Führungsorgane, die während des Eintauchvorganges in gegenseitigem Kontakt sind. Die dabei auftretende Reibung ist erheblich.

Es ist die Aufgabe der vorliegenden Erfindung, eine Vorrichtung der eingangs beschriebenen Art vorzuschlagen, welche nicht nur eine reibungsarme, sichere Parallelführung des Sägeaggregates beim Horizontal- und Vertikalschnitt gewährleistet, sondern das Sägeaggregat in seinen beiden Grundstellungen bereits dann gegen unbeabsichtigtes Verdrehen sichert, solange dasselbe noch nicht eingetaucht, d.h. die Durchführung des Schnitts noch nicht eingeleitet ist.

Diese Aufgabe wird durch die Erfindung gelöst, die im kennzeichnenden Teil des unabhängigen Patentanspruches definiert ist. Bevorzugte Ausführungsformen ergeben sich aus den abhängigen Ansprüchen.

Nachstehend wird anhand der beiliegenden Zeichnung ein Ausführungsbeispiel des Erfindungsgegenstandes beschrieben.
Fig. 1 ist eine vereinfachte Frontansicht eines am Sägebalken einer Plattensäge angeordneten Sägeaggregates,
Fig. 2 ist eine Perspektivdarstellung der Vorrichtung zur Parallelführung des Sägeaggregates sowie zu dessen Arretierung in seinen Ruhelagen,
Fig. 3 ist eine Frontansicht und
Fig. 4 eine Ansicht von oben der gleichen Vorrichtung.

Am nicht gezeichneten Gestell einer Plattensäge, wie sie beispielsweise aus den CH-PS 386 095, 621 083 und 659 424 ersichtlich ist, ist ein Sägebalken 1 horizontal verschiebbar gelagert. Ein am Sägebalken 1 angeordnetes Sägeaggregat 2 lässt sich einerseits im Sinne des Pfeiles P1 vertikal längs des Sägebalkens 1 verschieben, andererseits im Sinne des doppelten Pfeiles P2 um eine Achse A um 90° verschwenken. Eine weitere, mit dem Sägeaggregat durchführbare Bewegung ist das sogenannte Eintauchen und Austauchen, wobei das elektromotorisch angetriebene Sägeblatt auf das Schnittgut zu bzw. von diesem weg bewegt wird.

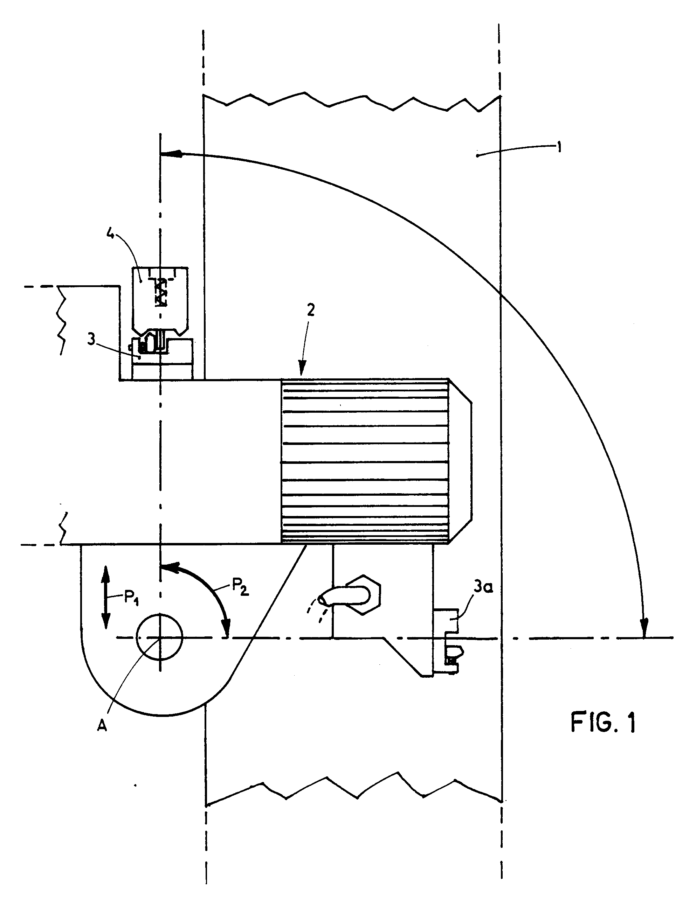

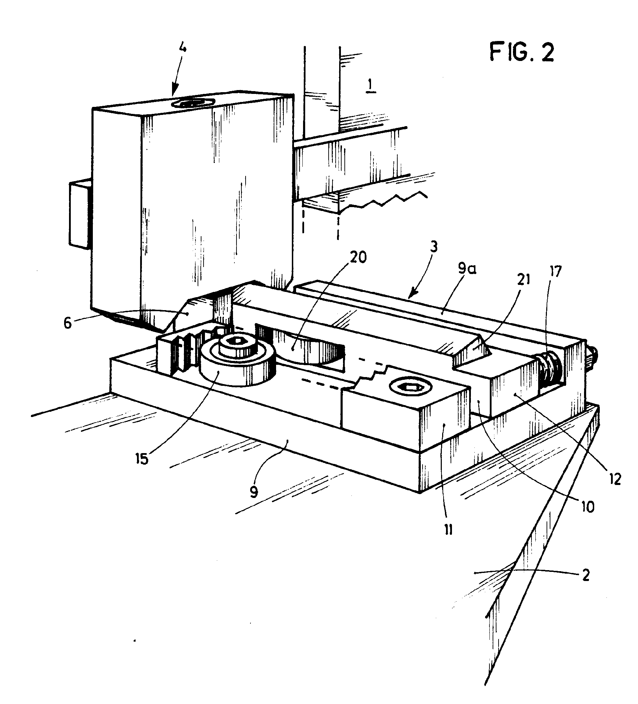

Bei der Durchführung eines Horizontal- oder Vertikalschnittes ist es von grösster Wichtigkeit, dass das Sägeblatt einerseits vor Schnittbeginn exakt in die gewünschte Schnittebene gebracht und andererseits bei Durchführung des Schnittes genau in dieser geführt wird. Ausserdem soll der beim Verschwenken des Sägeaggregats von der Horizontal- in die Vertikalposition und vice versa in der Endstellung auftretende Schlag elastisch abgefangen werden. Diese Bedingungen werden durch die Vorrichtung erfüllt, die in Fig. 1 in ihrer Gesamtheit mit 3 bezeichnet und die in den Fig. 2 bis 4 im Detail dargestellt ist.

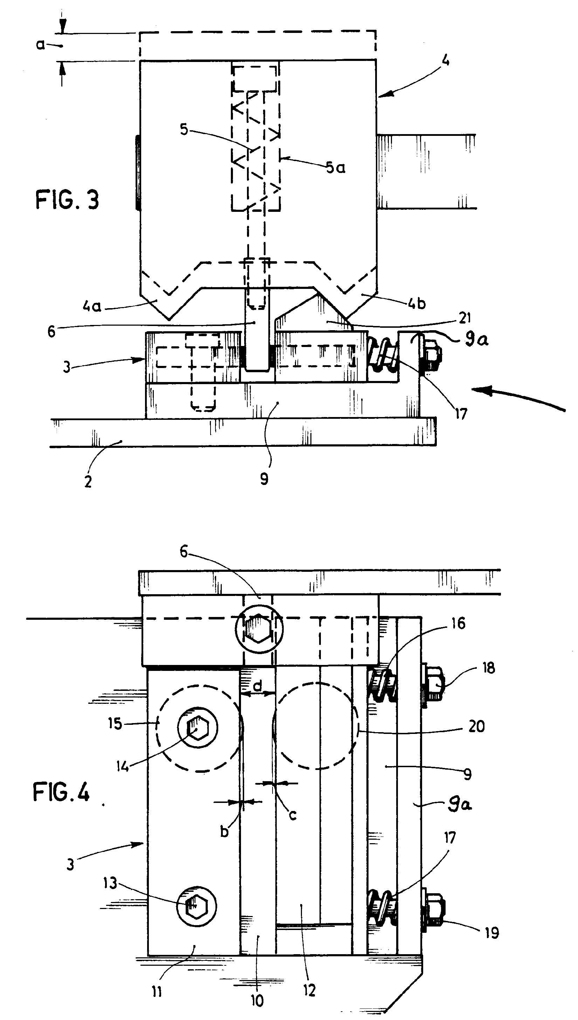

Am Sägebalken 1 ist ein Anschlagsorgan 4 befestigt, das beispielsweise als massiver Kunststoffblock ausgebildet sein kann und an seinem unteren Rand zwei nach unten ragende Anschläge 4a und 4b aufweist. Das Anschlagsorgan 4 ist mittels einer Feder 5, die in einer Bohrung 5a desselben angeordnet ist, so elastisch gelagert, dass es um das Mass a (Fig. 3) nach oben elastisch ausweichen kann, solange eine entsprechend nach oben gerichtete Kraft auf dasselbe einwirkt. In dieser oberen Ausweichstellung nimmt das Anschlagsorgan 4 dann die mit unterbrochenen Linien angedeutete Lage ein.

Mit dem Anschlagsorgan 4 ist ferner eine metalische Führungsplatte 6 verbunden, die allerdings gegenüber den Anschlägen 4a und 4b unter die Zeichnungsebene in Richtung der Eintauchbewegung versetzt ist, so dass sie mit dem Sägeaggregat erst in Kontakt kommen kann, wenn dieses in Eintauchrichtung bewegt wird.

Am Sägeaggregat 2 sind zwei praktisch identische Führungsvorrichtungen 3 und 3a befestigt, die um 90° gegeneinander versetzt sind und dazu bestimmt sind, in der Horizontal- und Vertikalschnittposition des Sägeaggregates mit dem Anschlagsorgan 4 und dessen Führungsplatte 6 zusammenzuwirken, um das Aggregat zunächst in seiner Ruhelage zu sichern und dann beim Ein- und Austauchvorgang zu führen.

Zu diesem Zwecke weist jede der Vorrichtungen 3 und 3a eine Grundplatte 9 auf (Fig. 2 bis 4), auf welcher zwei eine Nut 10 begrenzende Metallplatten 11 und 12 angeordnet sind. Die Metallplatte 11 ist mittels zweier Schrauben 13 und 14 starr auf der Grundplatte 9 befestigt, wobei ihre Lage relativ zur Grundplatte jedoch mit bekannten Mitteln justierbar ist. Die Schraube 14 bildet dabei gleichzeitig die Achse für die Aufnahme eines nicht dargestellten Kugellagers, das zur Lagerung einer Rolle 15 dient. Die Lage der Rolle 15 bezüglich der starren Platte 11 ist so gewählt, dass dieselbe um ein geringes Mass b (Fig. 4) über die Innenkante der Platte in die Nut 10 hineinragt.

Wie Fig. 4 zeigt, erstreckt sich die Platte 11, im Gegensatz zur Platte 12, nur bis zur Vertikalprojektion des Anschlagorgans 4, so dass die Platte 11 im ausgetauchten Zustand des Sägeaggregates nicht im Bereich der Anschläge 4a/4b liegt.

Die die Nut 10 auf der gegenüberliegenden Seite begrenzende Platte 12 ist auf einer nicht dargestellten, dem Fachmann bekannten Parallelführung beweglich gelagert und durch zwei Schraubenfedern 16 und 17 elastisch abgestützt. Letztere sind am Umfang zweier Schrauben angeordnet, die durch Muttern 18 und 19 an einem Steg 9a (Fig. 3) der Grundplatte 9 verankert sind. Die auf diese Weise elastisch gelagerte Platte 12 kann somit bei Belastung in Richtung des Grundplattenstegs 9a nachgeben, wird aber ihre ursprüngliche Lage unter dem Einfluss der relativ stark ausgelegten Federn 16 und 17 wieder einnehmen, sobald keine äusseren Kräfte mehr auf sie einwirken.

Auch an der Platte 12 ist mittels eines nicht gezeigten Kugellagers eine Rolle 20 drehbar gelagert, welche ebenfalls um ein geringes Mass c in die Nut 10 hineinragt. Der gegenseitige Abstand d der beiden Rollen ist so gewählt, dass er vorzugsweise etwas kleiner, auf keinen Fall aber grösser ist, als die Dicke e der Führungsplatte 6.

Auf der Platte 12 ist ferner, wie die Fig. 1 und 3 zeigen, ein gratförmiger Anschlagskeil 21 angeformt.

Im Betrieb arbeitet die beschriebene Vorrichtung folgendermassen:

Beim Verschwenken des Sägeaggregates 2 in die in Fig. 1 dargestellte Lage, welche dem Horizontalschnitt entspricht, wird der Anschlag 4b (Fig. 3) zunächst auf den Anschlagskeil 21 auftreffen, wobei der damit verbundene Stoss durch die Federn 16 und 17 abgefangen und gedämpft wird. Da das Anschlagsorgan 4 selbst elastisch nachgiebig gelagert ist, kann der Anschlag 4b den Anschlagskeil 21 passieren und dann die in Fig. 3 gezeichnete Lage einnehmen. In dieser Lage ist das Sägeaggregat 2, das sich immer noch in ausgetauchter Stellung befindet, gegen unbeabsichtigtes Verschwenken gesichert und könnte aus dieser Lage nur unter Ueberwindung der durch die Feder 5 ausgeübten elastischen Rückstellkraft herausgeschwenkt werden.

Beim Eintauchen des Sägeaggregates gelangt die Führungsplatte 6 in die Nut 10 zwischen die beiden Rollen 15 und 20 und wird dabei von der elastisch vorgespannten Rolle 20 gegen die feste Rolle 15 gepresst. Letztere ist mit bekannten Mitteln so einstellbar, dass sie das Sägeblatt genau in der gewünschten - horizontalen oder vertikalen - Schnittebene führt.

## Patentansprüche

1. Plattensäge zum Anbringen vertikaler und horizontaler Schnitte an einer praktisch auftechtstehenden Holzplatte, mit einem zur Aufnahme der zu zersägenden Platte dienenden, rostartigen Gestell, einem an dessen Frontseite frei verschiebbar geführten, sich über die gesamte Gestellhöhe erstreckenden und in jeder gewünschten Position blockierbaren Sägebalken (1), an welchem ein Sägeaggregat (2) höhenverschiebbar so gelagert ist, dass dasselbe beim Uebergang vom Horizontalschnittzum Vertikalschnittbetrieb, oder vice versa, um 90° schwenkbar ist, wobei am Sägebalken (1) ein Führungsorgan (4) angeordnet ist, das je nachdem, ob sich das Sägeaggregat (2) in der Horizontal- oder Vertikalschnittstellung befindet, mit einer von zwei am Sägeaggregat (2) um 90° gegeneinander versetzt angeordneten Führungsvorrichtungen (3, 3a) zusammenwirkt, dadurch gekennzeichnet, dass das am Sägebalken (1) angeordnete Führungsorgan (4) einerseits ein elastisch vorgespanntes Doppelprofil (4a, 4b) aufweist, das in Lage und Form auf ein an den beiden Führungsvorrichtungen (3, 3a) angeordnetes Gegenprofil (21) abgestimmt ist und das Sägeaggregat (2) zunächst in seiner jeweiligen Ruhelage, d.h. vor dem Eintauchen desselben, gegen unbeabsichtigtes Verdrehen sichert, und andererseits eine metallische Führungsplatte (6), welche bezüglich der Führungsvorrichtungen (3, 3a) in Eintauchrichtung so versetzt ist, dass sich diese Führungsplatte (6) erst beim Eintauchen des Sägeaggregates (2) zwischen zwei auf Kugellagern laufende Führungsrollen (15, 20) schiebt, wobei eine (15) der beiden Führungsrollen starr am Sägeaggregat (2) gelagert, die Gegenrolle (20) aber elastisch nachgiebig abgestützt ist.

2. Plattensäge nach Anspruch 1, dadurch gekennzeichnet, dass jede der beiden am Sägeaggregat angeordneten Führungsvorrichtungen (3, 3a) einen federbelasteten, mit einem nach oben ragenden Arretierungsprofil (21) versehenen Stossfangbalken (12) aufweist, in welchem die genannte Gegenrolle (20) drehbar gelagert ist.

3. Plattensäge nach einem der Ansprüche 1 oder 2, dadurch gekennzeichnet, dass das genannte Doppelprofil (4a, 4b) am unteren Abschnitt eines Kunststoffblockes angeformt ist, welcher seinerseits durch eine in einer Bohrung (5a) desselben angeordnete Feder (5) in seine Arretierungslage gedrückt wird.

## Claims

1. Panel saw for applying vertical and horizontal cuts to a substantially upright wooden panel, having a gridlike frame serving to receive the panel which is to be sawn up, a saw beam (1) guided in freely movable manner along the front side thereof, extending over the full height of the frame and adapted to be locked in any desired position, a sawing assembly (2) being mounted on said saw beam (1) in vertically adjustable manner so that said assembly (2) can be pivoted through 90° when switching from horizontal sawing to vertical sawing, or vice versa, whilst on said saw beam (1) is mounted a guide member (4) which co-operates with one of two guide means (3,3a) arranged offset at 90° from each other on the sawing assembly (2), depending on whether the sawing assembly (2) is in the horizontal or vertical cutting position, characterised in that the guide member (4) arranged on the saw beam (1) has on the one hand a resiliently biased double profile (4a,4b) which matches, in position and shape, a counter-profile (21) mounted on the two guide means (3,3a) and securely holds the sawing assembly (2) initially in its resting position, i.e. before it is lowered into engagement, to prevent accidental turning, and on the other hand a metal guide plate (6) which is offset relative to the guide means (3,3a) in the direction of engagement so that this guide plate (6) only pushes between two guide rollers (15,20) running on ball bearings when the sawing assembly (2) is engaged, one (15) of the two guide rollers being fixedly mounted on the sawing assembly (2), whereas the counter-roller (20) is supported in a resiliently flexible manner.

2. Panel saw according to claim 1, characterised in that each of the two guide means (3,3a) mounted on the sawing assembly has a spring-loaded impact-absorbing beam (12) provided with an upwardly projecting locking profile (21), in which the counter-roller (20) is rotatably mounted.

3. Panel saw according to one of claims 1 and 2, characterised in that the double profile (4a,4b) is formed on the lower part of a plastics block which is in turn pressed into the locking position by a spring (5) arranged in a bore (5a) thereof.

## Revendications

1. Scie à panneaux pour effectuer des coupes verticales et horizontales dans un panneau en bois disposé pratiquement verticalement, la scie comportant un bâti en forme de grille, servant à recevoir le panneau à scier, une poutre de sciage (1), guidée librement en translation sur le côté frontal du bâti, s'étendant sur toute la hauteur de ce dernier, pouvant être arrêtée dans toute position désirée et sur laquelle un groupe de sciage (2) est monté avec possibilité de déplacement en hauteur de telle sorte que ce groupe puisse pivoter de 90°, lors d'un passage d'un mode de coupe horizontal à un mode de coupe vertical, ou inversement, la poutre de sciage (1) étant pourvue d'un organe de guidage (4) qui, suivant que le groupe de sciage (2) se trouve dans la position de coupe horizontale ou dans la position de coupe verticale, coopère avec l'un de deux dispositifs de guidage (3, 3a), disposés sur le groupe de sciage (2) en étant décalés mutuellement de 90°, scie caractérisée en ce que l'organe de guidage (4) disposé sur la poutre de sciage (1) a d'une part un double profil (4a, 4b) soumis à une précontrainte élastique et qui est conçu en position et en forme en correspondance à un contre-profil (21), prévu sur les deux dispositifs de guidage (3, 3a), et qui empêche une torsion intempestive du groupe de sciage (2) initialement dans sa position de repos correspondante, c'est-à-dire avant son mouvement de plongée, et d'autre part une plaque métallique de guidage (6), qui est décalée par rapport aux dispositifs de guidage (3, 3a) dans la direction de plongée de telle sorte que cette plaque de guidage (6) soit amenée, lors du mouvement de plongée du groupe de sciage (2), entre deux rouleaux de guidage (15, 20) montés sur des roulements à billes, un (15) des deux rouleaux de guidage étant monté rigidement sur le groupe de sciage (2) tandis que le rouleau antagoniste (20) est cependant soutenu avec souplesse élastique.

2. Scie à panneaux selon la revendication 1, caractérisée en ce que chacun des deux dispositifs de guidage (3, 3a), prévus sur le groupe de sciage, comprend une poutre (12) d'absorption de chocs qui est sollicitée par ressorts, qui est pourvue d'un profil d'arrêt (21) faisant saillie vers le haut et dans laquelle est monté à rotation le rouleau antagoniste (20) précité.

3. Scie à panneaux selon l'une des revendications 1 ou 2, caractérisée en ce que le double profil précité (4a, 4b) est formé sur une partie inférieure d'un bloc en matière plastique, qui est lui-même poussé dans sa position d'arrêt par un ressort (5) disposé dans un trou (5a) de ce bloc.
